Europäisches Patentamt

European Patent Office

Office européen des brevets

(19)

(11) Publication number: **0 010 912**
**B1**

(12) **EUROPEAN PATENT SPECIFICATION**

(45) Date of publication of patent specification: **22.06.83**

(51) Int. Cl.³: **G 07 F 13/06, A 47 J 31/44**

(21) Application number: **79302294.8**

(22) Date of filing: **22.10.79**

(54) Improvements in and relating to ingredient containers for vending machines.

(30) Priority: **24.10.78 GB 4176778**

(43) Date of publication of application:
**14.05.80 Bulletin 80/10**

(45) Publication of the grant of the patent:
**22.06.83 Bulletin 83/25**

(84) Designated Contracting States:
**AT BE CH DE FR IT LU NL SE**

(56) References cited:
**FR - A - 2 014 254**
**FR - A - 2 373 843**
**US - A - 1 832 692**
**US - A - 3 200 997**
**US - A - 3 204 832**

(73) Proprietor: **VGL INDUSTRIES LIMITED**
**Piper House, 253/7 Burlington Road**
**New Malden, Surrey KT3 4NQ (GB)**

(72) Inventor: **Gosden, Julian Kenneth**
**13 Ashtead Common**
**Ashtead, Surrey (GB)**

(74) Representative: **Evans, David Charles et al,**
**F.J. CLEVELAND & COMPANY 40-43, Chancery**
**Lane**
**London, WC2A 1JQ (GB)**

Improvements in and relating to ingredient containers for vending machines.

The present invention relates to ingredient containers for vending machines.

As is well-known a beverage vending machine includes a number of containers each of which contains a beverage forming ingredient in particulate or powdered form. Thus, for example, succession of containers within a machine may contain respectively tea, coffee, sugar, cream, chocolate and cocoa in powdered form. When a beverage is required, the user operates the machine which dispenses into a cup a measured charge of the selected ingredients for example coffee powder, sugar powder, and cream and then adds hot water to this powdered mixture.

Our French Patent Fr—A—2373843 describes and claims a disposable container and dispenser assembly for a vending machine which comprises a container body adapted to contain ingredients to be dispensed and valve means for controlling the dispensing of the ingredients whereby the valve means is captive with the container body so that the assembly can be removed from its operative location in the machine for disposal as a single unit. Such a container and dispenser assembly is adapted to be used by inverting the container and valve so that the valve assembly is disposed downwardly and the ingredients can, on operation of the valve, be caused or allowed to flow out of the dispensing nozzle, either under, or assisted by, gravitational force.

It has been noticed, however, there is a tendency when the container is full of ingredients for the weight of the ingredients to slump downwardly in the container and the packing loading at the valve is high. This can, in certain circumstances, inhibit the operation of the valve and which in extreme circumstances can actively interfere with the dispensing operation.

An attempt has been made to alleviate this problem in United States Patent US—A—3,204,832 in which a valve guide member supports a flexible diaphragm provided with an opening for guiding the valve and further openings to permit material to fall therethrough onto a funnel shaped member which serves in part to reduce pressure on the valve member.

The present invention seeks to improve on arrangements of this sort so that a combined valve guide and baffle can be readily manufactured and assembled in situ.

According to the present invention, there is provided an ingredient container and dispensing assembly for a dispensing or vending machine, which assembly comprises a container for the ingredients having a neck defining a dispensing opening;

a collar incorporating a nozzle which collar is adapted to be retained about said container neck;

interengagement means provided between the collar and said container neck;

a valve guide member located within said collar and/or said neck, said valve guide member being dimensioned to permit ingredients to pass to said dispensing nozzle and further having a blind bore therein.

a valve member disposed within said bore and movable between an open position and closed position and baffle means spaced upwardly of the valve seat for the valve when in the closed position to control the ingredient flow to the dispensing nozzle, characterized in that said baffle means is a disc formed with the valve guide member disposed across the container neck, and spaced upwardly of the valve member, said disc having a plurality of holes for the passage of ingredients therethrough.

In this way the weight of the ingredients is to some extent taken by the baffle means spaced upwardly of the valve means, and the whole weight of the ingredients is not concentrated on the valve element itself. The baffle means may also serve to prevent lumps of powdered ingredient blocking the valve mechanism.

In a preferred embodiment of the present invention the valve guide member and its associated baffle means may be disposed between a shoulder on the internal surface of the neck and the shoulder of the dispensing nozzle and retained therein by means of interengagement means comprising a plurality of arcuate, circumferentially spaced barbs on the outer surface of the container neck and a plurality of mating slots provided in the collar.

Following is a description by way of example only and with reference to the accompanying drawings of methods of carrying the invention into effect.

In the drawings:—

FIGURE 1 is an end view of a container incorporating the neck nozzle assembly in accordance with the present invention;

FIGURE 2 is a section through the neck of FIGURE 1;

FIGURE 3 is the detail of the valve guide member of FIGURE 2; and

FIGURE 4 is a side view of the member of FIGURE 3.

In the drawings, the container 10 has a downwardly extending neck 11 which supports and carries a dispensing nozzle 12. The dispensing neck 11 is provided on the upper part of the neck juxtaposed the shoulders 13 with a plurality of axially extending supporting ribs 14. Downwardly of the supporting ribs 14 the outer surface of the neck is provided with an annular rib 15. The lower portion of the neck is rabbeted over the greater part thereof to provide a lower cylindrical inner surface 16 defined at its upper end in an annular shoulder 17.

The outer surface of neck 11 is provided spaced downwardly of annular rib 15 with a plurality of barbs 18 each barb being disposed circumferentially of the outer surface of the neck and spaced circumferentially one with respect to the other.

Each barb has a lower inclined face 19 and an upper radial face 20. The dispensing nozzle 12 comprises a sleeve 21 adapted to overlay a neck 11 downwardly of rib 15. A frustoconical portion 22 and a cylindrical nozzle 23 define a valve seat 24. The sleeve 21 is provided with a plurality of circumferentially extended slots 25 each of which is adapted to accommodate a barb 18. The upper extremity of sleeve 21 is chamfered on the inner surface at 26 so that on applying the nozzle 12 to the neck 11 the chamfered upper extremity 26 of the nozzle is entered over the lower end of the neck until the chamfered portion 26 abuts inclined surface 19 of barb 18. Upward pressure causes the upper part of the sleeve 21 to expand and ride over barb 18 and continued pressure of the nozzle towards the container body results in the upper part of sleeve 21 riding over barb 18 until the upper extremity abuts rib 15 and the barbs 18 snap into their corresponding circumferential slots 25 thereby retaining the nozzle about the neck of the container.

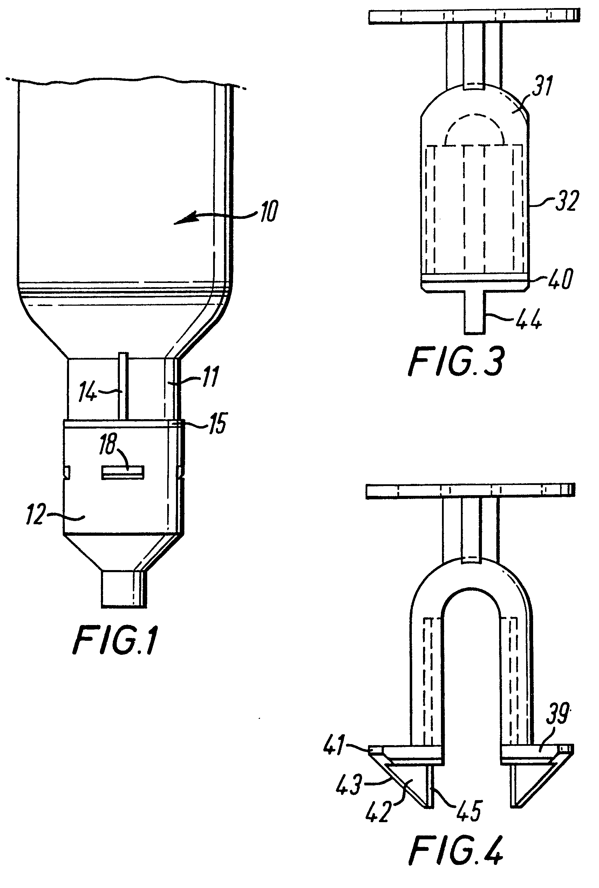

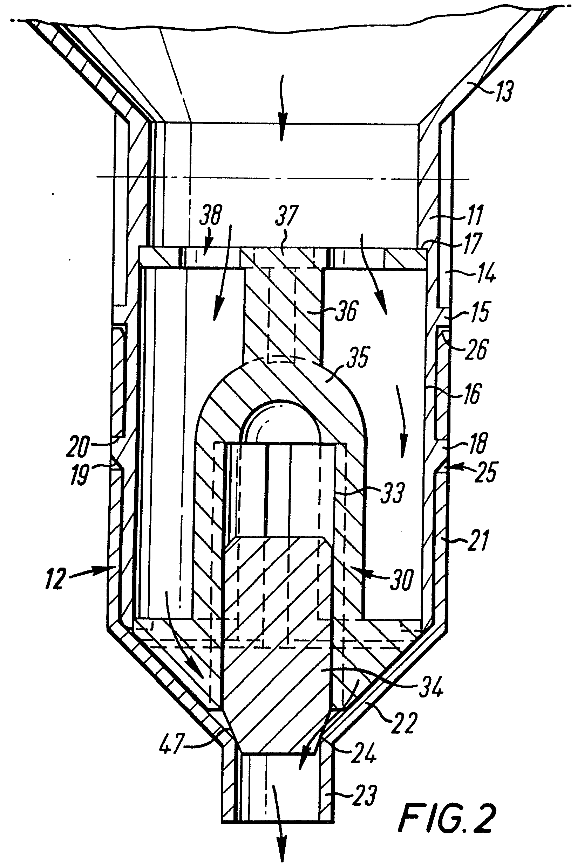

The nozzle and neck assembly are adapted to accommodate a valve block 30 which comprises a substantially cylindrical block 31 which is cut away on diametrically opposed and spaced surfaces to define planar side faces 32 (see FIGURE 3). The block is provided with an internal bore 33 adapted to accommodate a valve element 34.

The bore 33 is opened at its lower end and is closed at its upper end and is disposed substantially co-axially with the neck of the container and the nozzle 23. The internal bore 33 is a dimension such that it is open to each of the side faces 32. The block 30 is domed at its upper end 35 and has an upstanding cruciform spigot 36 extending upwardly therefrom; which spigot 36 carries a disc 37 extending substantially radially of the block axis; the radius of the disc being such as to be a fit with the cylindrical inner surface 16 of neck 11. The lower portion of block 30 is provided with a substantially radial flange 39 the side portions of which 40 are cut away to be continuous with planar side faces 32 of block 30. The flanges 39, therefore, extend radially outwardly of curved end surfaces of the block 30. Each flange portion 39 has an arcuate outer surface 41 and carries a depending abutment 42 having a curved outer surface 43 continuous with the lower part of flange 39 which defines part of the frustocone itself defined by the inner surface frustoconical portion 22 of nozzle 12. The side surfaces 44 of abutment 42 are substantially planar, the abutments 42 are disposed diametrically one with respect to the other of the axis of block 30. The internal surface 45 of each abutment is curved to provide a continuation of the curved inner surface of the internal bore 33 in block 30.

In operation the block 30 is disposed within the nozzle and neck assembly as shown in FIGURE 2 with the periphery of disc 37 abutting shoulder 17 and the surface 43 of the abutment 42 engaging with the internal surface of the frustoconical portion 22 of neck 11 so that when the dispensing nozzle 12 is snapped into engagement with neck 11 valve block 30 is positively retained in position within the neck and nozzle assembly.

The valve element 34 comprises a substantially cylindrical ferromagnetic block the outer surface of which is chamfered to provide a frustoconical valve seat 47, the element being a sufficient weight that in the rest position it rests against the valve seat 24 to close the dispensing nozzle from the container.

On the application of a magnetic field the ferromagnetic valve element 34 is excited and lifted from its valve seat to allow ingredients to flow from the container via the holes 38 in disc 37 either side of the valve block 30 past the side walls 32 and out of the nozzle 23. On de-energising valve element 34 the element under its own weight moves downwardly until it engages with seat 24 and shuts off the flow of ingredient from the nozzle 23.

The disc 37 serves to support the greater weight of ingredient within the container and to take some of the weight from the valve element to allow it to move more freely in operation.

## Claims

1. An ingredient container and dispensing assembly for a dispensing or vending machine, which assembly comprises a container (10) for the ingredients having a neck (11) defining a dispensing opening; a collar (12) incorporating a nozzle (23) which collar is adapted to be retained about said container neck; interengagement means (18, 25) provided between the collar and said container neck; a valve guide member (30) located within said collar and/or said neck, said valve guide member being dimensioned to permit ingredients to pass to said dispensing nozzle and further having a blind bore (33) therein; a valve member (34) disposed within said bore and movable between an open position and closed position; and baffle means (37) spaced upwardly of the valve seat (24) for the valve when in the closed position, to control the ingredient flow to the dispensing nozzle, characterized in that said baffle means is a disc (37) formed with the valve guide member disposed across the container neck, and spaced upwardly of the valve member (34), said disc having a plurality of holes (38) for the passage of ingredients therethrough.

2. An assembly as claimed in claim 1, wherein the valve guide member (30) and its associated baffle means (37) is located between a shoulder (17) on the internal surface of the container neck and a shoulder (22) defining the dispensing nozzle and is retained by means of interengagement means comprising a plurality of arcuate circumferentially spaced barbs (18) on the outer surface of the container neck and a plurality of mating slots (25) provided in the collar.

3. An assembly as claimed in either preceding claim, wherein the dispensing neck is provided on the upper part of the neck juxtaposed the shoulders (13), with a plurality of axially extending ribs (14).

4. An assembly as claimed in claim 3, wherein the outer surface of the neck is provided with an annular rib (15) disposed downwardly of said axial ribs (14).

5. An assembly as claimed in any preceding claim, wherein the lower portion of the neck is rabbeted to provide a lower cylindrical inner surface defined at its upper end by an annular shoulder (17).

6. A dispensing or vending machine comprising an ingredient container and dispensing assembly as claimed in any preceding claim.

## Revendications

1. Assemblage de distribution comportant un récipient à ingrédients pour machine distributrice ou de vente, cet assemblage comprenant un récipient (10) pour les ingrédients, comportant un col (11) terminé par une ouverture de distribution; un manchon (12) comportant un conduit de distribution (23) et destiné à être retenu tout autour du col susdit du récipient; des moyens d'interconnexion (18, 25) prévus entre ce manchon et le col du récipient; un élément de guidage de soupape (30) localisé à l'intérieur du manchon et/ou du col, cet élément de guidage de soupape étant de dimensions propres à permettre le passage des ingrédients vers le conduit de distribution et comportant en outre un passage borgne (33); un élément de soupape (34) monté à l'intérieur de ce passage et mobile entre une position d'ouverture et une position de fermeture; et un dispositif à chicane (37) disposé au-dessus et à l'écart du siège de soupape (24), pour que la soupape, lorsqu'elle est en position de fermeture, règle l'écoulement des ingrédients vers le conduit de distribution, cet assemblage étant caractérisé en ce que le dispositif à chicane est un disque (37) formé avec l'élément de guidage de soupape disposé en travers du col du récipient, et se situant au-dessus et à l'écart de l'élément de soupape (34), ce disque comportant une série de trous (38) pour le passage des ingrédients.

2. Assemblage suivant la revendication 1, caractérisé en ce que l'élément de guidage de soupape (30) et son dispositif à chicane associé (37) sont localisés entre un épaulement (17) prévu sur la surface interne du col du récipient et un épaulement (22) formant le conduit de distribution, et sont maintenus en place par des moyens d'interconnexion comprenant une série d'ergots courbes (18), espacés suivant la circonférence de la surface externe du col du récipient et une série de fentes correspondantes (25) prévues dans le manchon (12).

3. Assemblage suivant l'une ou l'autre des revendications précédentes, caractérisé en ce que le col distributeur comporte, à sa partie supérieure, près des épaulements (13), une série de nervures (14) s'étendant en direction axiale.

4. Assemblage suivant la revendication 3, caractérisé en ce que la surface externe du col comporte un nervure annulaire (15) prévue en dessous des nervures axiales (14).

5. Assemblage suivant l'une quelconque des revendications précédentes, caractérisé en ce que la partie inférieure du col est creusée pour former une surface interne cylindrique inférieure, terminée, à son extrémité supérieure, par un épaulement annulaire (17).

6. Machine de distribution ou de vente, comprenant un assemblage distributeur avec récipient à ingrédients suivant l'une quelconque des revendications précédentes.

## Patentansprüche

1. Ingredienzienbehälter- und Abgabeeinheit für einen Verkaufsautomaten, mit:
— einem Ingredienzienbehälter (10) mit einem eine Abgabeöffnung bildenden Hals (11);
— einem Düsenabschnitt (12) mit Düsenmund (23), wobei der Düsenabschnitt um den Behälterhals festlegbar ist; Rastmitteln (18, 25) zwischen dem Düsenabschnitt und dem Behälterhals;
— einem innerhalb des Düsenabschnitts und/oder Behälterhalses positionierten Ventilführungsglied (30), das so dimensioniert ist, daß Ingredienzien zu dem Düsenmund gelangen können, und das eine Blindbohrung (33) aufweist; und
— einem Ventilelement (34), das innerhalb der Bohrung liegt und zwischen einer Offen- und einer Schließstellung beweglich ist, sowie einem Leitorgan (37), das mit Abstand oberhalb des Ventilsitzes (24) für das in der Schließstellung befindliche Ventil angeordnet ist zur Regelung des Ingredienzienstroms zu dem Düsenmund, dadurch gekennzeichnet, daß das Leitorgan eine Scheibe (37) ist, die mit dem Ventilführungsglied ausgebildet, quer im Behälterhals angeordnet und von dem Ventilelement (34) nach oben beabstandet ist, wobei die Scheibe mit einer Mehrzahl Löcher (38) zum Durchtritt von Ingredienzien ausgebildet ist.

2. Einheit nach Anspruch 1, dadurch gekennzeichnet, daß das Ventilführungsglied (30) und sein zugehöriges Leitorgan (37) zwischen einer Schulter (17) an der Innenfläche des Behälterhalses und einer Schulter (22), die den Düsenmund begrenzt, positioniert und durch Rastmittel gehalten sind, wobei die Rastmittel eine Mehrzahl von gewölbten, umfangsmäßig beabstandeten Widerhaken (18) an der Außenfläche des Behälterhalses und eine Mehrzahl zugehörige Schlitze (25) in dem Düsenabschnitt (12) umfassen.

3. Einheit nach einem der vorhergehenden Ansprüche, dadurch gekennzeichnet, daß der Behälterhals an seinem oberen Teil angrenzend an die Schulter (13) mit einer Mehrzahl von axial verlaufenden Rippen (14) ausgebildet ist.

4. Einheit nach Anspruch 3, dadurch gekennzeichnet, daß die Außenfläche des Behälterhalses mit einer ringförmigen Rippe (15) versehen ist, die unterhalb der axial verlaufenden Rippen (14) angeordnet ist.

5. Einheit nach einem der vorhergehenden Ansprüche, dadurch gekennzeichnet, daß der untere Abschnitt des Halses so gefalzt ist, daß eine untere zylindrische Innenfläche gebildet ist, die an ihrem Oberende durch eine Ringschulter (17) begrenzt ist.

6. Verkaufsautomat, dadurch gekennzeichnet, daß er eine Ingredienzeinbehälter- und Abgabeeinheit nach einem der vorhergehenden Ansprüche aufweist.

FIG.1

FIG.3

FIG.4

**0010912**

FIG.2